# EUROPEAN PATENT APPLICATION

(11) **EP 3 267 157 A1**
(43) Date of publication of application: **10.01.2018**
(21) Application number: 16758843.3
(22) Date of filing: 26.02.2016
(51) Int. Cl.: G01D 5/20, F02B 39/16

(54) **POSITION DETECTION DEVICE**

(30) Priority: 05.03.2015 JP 2015043102
(71) Applicant: Hitachi Automotive Systems, Ltd., Hitachinaka-shi, Ibaraki 312-8503 (JP)
(72) Inventor: AKIYAMA, Yoshiyuki, Hitachinaka-shi, Ibaraki 312-8503 (JP); ONOZUKA, Junji, Hitachinaka-shi, Ibaraki 312-8503 (JP); TAKAHASHI, Tsukasa, Hitachinaka-shi, Ibaraki 312-8503 (JP); KATO, Takeshi, Hitachinaka-shi, Ibaraki 312-8503 (JP); GORAI, Nobuaki, Hitachinaka-shi, Ibaraki 312-8503 (JP)
(74) Representative: MERH-IP Matias Erny Reichl Hoffmann Patentanwälte PartG mbB
(86) International application number: PCT/JP2016/055739
(87) International publication number: WO 2016/140149

(57) **Abstract**

The purpose of the present invention is to provide an eddy current position sensor that is less susceptible to the influence of changes in gaps due to installation or changes in temperature, or by changes in coil properties due to changes in temperature. The present invention is configured to detect the position of an object 4 to be measured by detecting the difference in signals from a reference coil 8A and a sensing coil 8B, which are configured such that, even if the object 4 to be measured rotates in a rotation direction 6A, a gap 7A between the reference coil 8A in a sensor 2 and a reference surface 9A on the object 4 to be measured does not change and a gap 7B between the sensing coil 8B and a sensing surface 9B on the object 4 to be measured changes, wherein changes in a gap 7 between the object 4 to be measured and each of coils 8A, 8B are signal output as magnetic field changes.

## Description

### Technical Field

The present invention relates to a position detection device that measures a position of a moving non-measuring object, and especially relates to a position detection device capable of measuring the moving non-measuring object in a non-contact manner.

### Background Art

Conventionally, an eddy current-type detection device using a coil is known as a turbo sensor in position detection devices that detect blades of a turbo that supercharges the air sucked by an engine. The turbo sensor outputs a signal having amplitude according to a distance of a gap between the blade of the turbo as an object to be measured and the coil. Thus, a configuration to detect a rotational speed of an impeller of a compressor or a turbine by the turbo sensor is proposed.

However, the turbo sensor detects a plurality of impellers in the impeller of the compressor, the plurality of impellers passing through above the turbo sensor, and outputs a pulse signal per one rotation of a connecting shaft that connects the turbine and the compressor. Although the turbo sensor is useful in accurately detecting the rotational speed of a supercharger in a low-speed rotation range, a frequency of the signal output from the turbo sensor is very high in a high-speed rotation range. Therefore, the signal output of the turbo sensor needs to be converted by a frequency divider for processing in a control device, resulting in an increase in the cost due to an increase in the number of parts.

In view of the above, there is a configuration described in PTL 1 as a configuration to accurately detect the rotational speed of the supercharger in the low-speed rotation range, and to decrease a load to the control device even in the high-speed rotation range.

In the configuration described in PTL 1, the turbo sensor outputs a first signal having first amplitude according to passage of a large blade in the impeller of the supercharger and outputs a second signal having second amplitude according to passage of a small blade to highly accurately recognize the rotational speed of the supercharger, and the control device recognizes the rotational speed of the supercharger on the basis of either one of the first or second signal. Therefore, the frequency of the signal from the first-term turbo sensor can be decreased, whereby the load to the control device can be decreased.

### Citation List

### Patent Literature

PTL 1: JP 2013-234591 A

### Summary of Invention

### Technical Problem

However, the configuration described in PTL 1 has a problem that a characteristic of the coil is changed due to an error of a manufacturing gap between the turbo sensor and the blade of the turbo as the object to be measured, for example, a difference between gaps due to shift of an attaching position of the turbo sensor or a position of a center shaft of the impeller of the turbo, a difference between gaps at a high temperature and a low temperature due to a difference between linear expansion coefficients, or temperature change, and the first amplitude or the second amplitude varies, the first amplitude and the second amplitude cannot be distinguished, resulting in misrecognition of the rotational speed of the supercharger.

An objective of the present invention is to provide a position detection device capable of accurately detecting amplitude.

### Solution to Problem

A position detection device of the present invention is configured such that a gap between a first coil and an object to be measured is unchanged and a gap between a second coil and the object to be measured is changed, changes of the gaps between the respective coils and the object to be measured are output as signals as change of a magnetic field, and a difference between the signals of the first coil and the second coil is detected.

### Advantageous Effects of Invention

According to the present invention, a position detection device capable of accurately detecting amplitude can be provided.

Note that problems, configurations, and effects other than the above description will become clear by description of embodiments below.

### Brief Description of Drawings

[FIG. 1] FIG. 1 is diagrams of a configuration to detect a rotation position of a disk-like object to be measured according to the present invention.
[FIG. 2] FIG. 2 is a configuration diagram of a circuit that detects a difference between a reference coil and a sensing coil according to the present invention.
[FIG. 3] FIG. 3 is configuration diagrams of a position detection device in which a shielding material is arranged according to the present invention.
[FIG. 4] FIG. 4 is diagrams of a configuration to detect a rotation position, in which a sensor of a reference coil and a sensor of a sensing coil are separate bodies, according to the present invention.
[FIG. 5] FIG. 5 is diagrams of a configuration to detect a rotation position, in which a gap is changed in a direction different from a moving direction of an object to be measured according to the present invention.
[FIG. 5-1] FIG. 5-1 illustrates a case in which the sensing surface is positioned low, of the diagrams of the configuration to detect a rotation position, in which a gap is changed in a direction different from a moving direction of an object to be measured according to the present invention.
[FIG. 5-2] FIG. 5-2 illustrates a case in which the sensing surface is positioned middle, of the diagrams of the configuration to detect a rotation position, in which a gap is changed in a direction different from a moving direction of an object to be measured according to the present invention.
[FIG. 5-3] FIG. 5-3 illustrates a case in which the sensing surface is positioned high, of the diagrams of the configuration to detect a rotation position, in which a gap is changed in a direction different from a moving direction of an object to be measured according to the present invention.
[FIG. 6] FIG. 6 is diagrams of a configuration to detect a position of a rod-like object to be measured according to the present invention.
[FIG. 6-1] FIG. 6-1 is diagrams of a configuration to detect a position of a rod-like object to be measured, in which a reference surface is built in a sensor, according to the present invention.
[FIG. 7] FIG. 7 is diagrams of a configuration to detect a position of a rod-like object to be measured even if the rod is rotated, by causing the rod to be formed into a conical shape, according to the present invention.
[FIG. 8] FIG. 8 is diagrams of a configuration to detect a rotation position of a disk-like object to be measured, and the configuration having a shape in which characteristics of a reference coil and a sensing coil are intersecting gaps, according to the present invention (angle a).
[FIG. 9] FIG. 9 is diagrams of a configuration to detect a rotation position of a disk-like object to be measured, and the configuration having a shape in which characteristics of a reference coil and a sensing coil are intersecting gaps, according to the present invention (angle b).
[FIG. 10] FIG. 10 is diagrams of a configuration to detect a rotation position of a disk-like object to be measured, and the configuration having a shape in which characteristics of a reference coil and a sensing coil are intersecting gaps, according to the present invention (angle c).
[FIG. 11] FIG. 11 is a graph illustrating rotation angles (an angle a, an angle b, and an angle c) of a disk-like object to be measured, and intersecting relationship characteristics between a gap 1 of a reference coil and a gap 2 of a sensing coil, according to the present invention.
[FIG. 12] FIG. 12 is a graph illustrating a relationship between rotation positions (an angle a, an angle b, and an angle c) of a disk-like object to be measured, and an output 117, according to the present invention.
[FIG. 13] FIG. 13 is diagrams of a configuration to detect a rotation position of a disk-like object to be measured, in which a reference surface and a sensing surface facing a reference coil and a sensing coil are formed into a rib shape, according to the present invention.
[FIG. 14] FIG. 14 is diagrams of a configuration to detect a rotation position of the disk-like object to be measured, in which a reference surface and a sensing surface facing a reference coil and a sensing coil are formed into a rib shape, and are further separated through an insulating material, according to the present invention.
[FIG. 15] FIG. 15 is diagrams of a configuration to detect a rotation position of a disk-like object to be measured, in which a reference surface and a sensing surface facing a reference coil and a sensing coil are formed into a rib shape, and cores are respectively arranged in the reference coil and the sensing coil, according to the present invention.
[FIG. 16] FIG. 16 is diagrams of a configuration to detect a position of a rod-like object to be measured, in which a sensing surface is formed in a stepwise manner, according to the present invention.

### Description of Embodiments

Hereinafter, embodiments according to the present invention will be described using the drawings. Note that, in the drawings, portions having the same structure are denoted with the same reference sign and description is omitted.

### (First Embodiment)

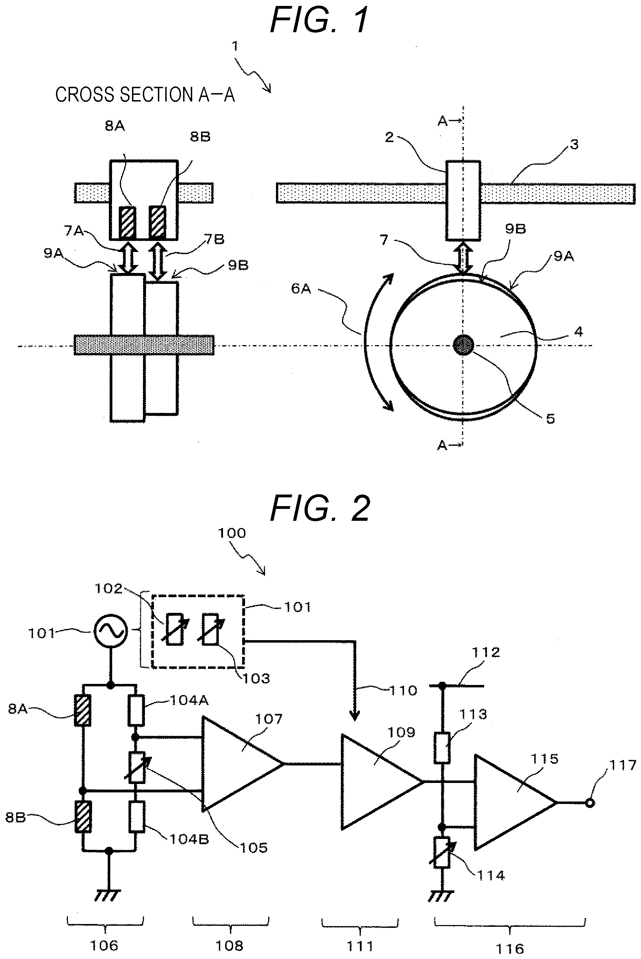

A configuration of a position detection device according to the present embodiment will be described using FIGS. 1 and 2. FIG. 1 is configuration diagrams of a position detection device 1 according to the present embodiment. FIG. 2 is a diagram illustrating a circuit 100 that detects a difference between a reference coil 8A and a sensing coil 8B of the position detection device 1 according to the present embodiment.

In FIG. 1, a sensor 2 includes the reference coil 8A and sensing coil 8B facing a reference surface 9A and a sensing surface 9B of an object to be measured 4. The sensor 2 is fixed to a sensor attaching portion 3 and is not moved. Further, while the object to be measured 4 is supported by an object to be measured support portion 5, the object to be measured 4 is rotated in a rotating direction 6A.

A gap 7A between the reference surface 9A of the object to be measured 4 and the sensor 2 is constant even if the object to be measured 4 is rotated in the rotating direction 6A because the reference surface 9A is an outer circumferential surface of a perfect circle. On the other hand, a gap 7B between the sensing surface 9B of the object to be measured 4 and the sensor 2 is changed as the object to be measured 4 is rotated in the rotating direction 6A because the sensing surface 9B is an outer circumferential surface of an ellipse.

That is, when the object to be measured 4 is rotated in the rotating direction 6A, the gaps 7A and 7B between the reference surface 9A and the sensing surface 9B, and the sensor 2 are gradually changed from the same gap to gaps having a difference according to an angle position of the object to be measured 4.

In FIG. 2, the reference coil 8A and the sensing coil 8B configure a bridge circuit 6 with a resistor 104A, a resistor 104B, and a reference-sensing coil balance adjusting volume 105.

The bridge circuit 6 receives an alternating current voltage from a transmitter 101 upstream of the bridge circuit 6. Inductances of the reference coil 8A and the sensing coil 8B are changed due to the respective gaps 7A and 7B between the reference coil 8A and the sensing coil 8B and the object to be measured 4, and thus respective impedances are changed. An intermediate voltage between the impedance of the reference coil 8A and the impedance of the sensing coil 8B, and an intermediate voltage between the resistor 104A and a combined resistor of the resistor 104B and the reference-sensing coil balance adjusting volume are input to an operational amplifier 107 of a differential amplifier circuit 108 and a difference between the intermediate voltages is detected.

An output of the operational amplifier 108 is input to an operational amplifier 109 of a detector circuit 111 that detects a wave upon receiving a synchronization signal 110 from the transmitter 101. An output of the operational amplifier 109 is input to an operational amplifier 115 of an offset circuit 116 that offsets an output 117, together with a voltage obtained by dividing a reference voltage 112 with a resistor 113 by an offset adjusting volume.

With the above circuit configuration, the output of the operational amplifier 107 is adjusted to become 0 by the reference-sensing coil balance adjusting volume 105, and individual variations of the reference coil 8A and the sensing coil 8B can be cancelled, in an arbitrary position of the object to be measured 4. Further, the output 117 can be adjusted by adjusting an offset adjusting volume 114 of the offset circuit 116, a frequency adjusting volume 102 or a gain adjusting volume 103 of the transmitter 101.

With the configurations of the position detection device 1 of FIG. 1 and the circuit 100 of FIG. 2, the sensor 2 detects a relative difference between the reference surface 9A and the sensing surface 9B and outputs the output 117. Therefore, the output 117 is less likely to be affected even if a gap 7 between the object to be measured 4 and the sensor 2 is changed and an absolute position is changed due to positional aberration between the object to be measured support portion 5 and the object to be measured 4. Further, the output 117 is less likely to be affected even if the gap 7 between the sensor 2 and the object to be measured 4 is similarly changed due to temperature change. Further, the output 117 is less likely to be affected even if impedance characteristics of the reference coil 8A and the sensing coil 8B are changed due to temperature change because a difference between the impedance characteristics is detected.

### (Second Embodiment)

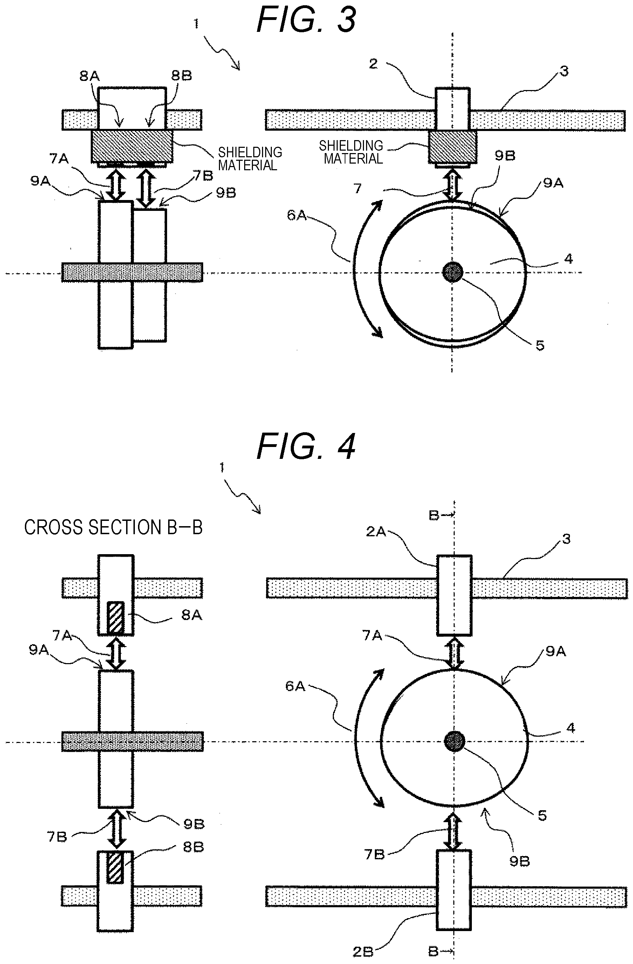

As illustrated in FIG. 3, a shield 10 is arranged to cover a periphery of a reference coil 8A and a sensing coil 8B of a position detection device 1 of FIG. 1, whereby an influence of disturbance from directions other than a direction of an object to be measured 4 can be avoided. If the material of the shield is a soft magnetic material, the position detection device 1 is less likely to be affected by magnetization.

### (Third Embodiment)

FIG. 4 illustrates an example in which a reference coil 8A and a sensing coil 8B are respectively arranged in separate sensors 2A and 2B. An object to be measured 4 on the sensor 2A side is configured to be a perfect circle and referred to as the reference surface 9A, and the object to be measured 4 on the sensor 2B side is configured to be an ellipse and referred to as the sensing surface 9B, and the present embodiment can obtain an effect similar to the first embodiment.

### (Fourth Embodiment)

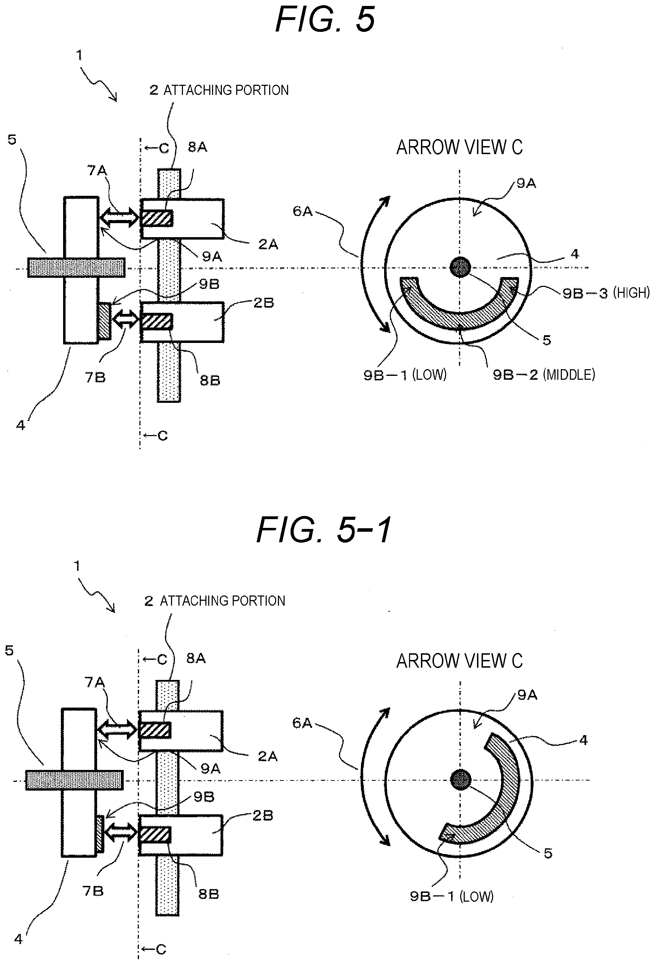

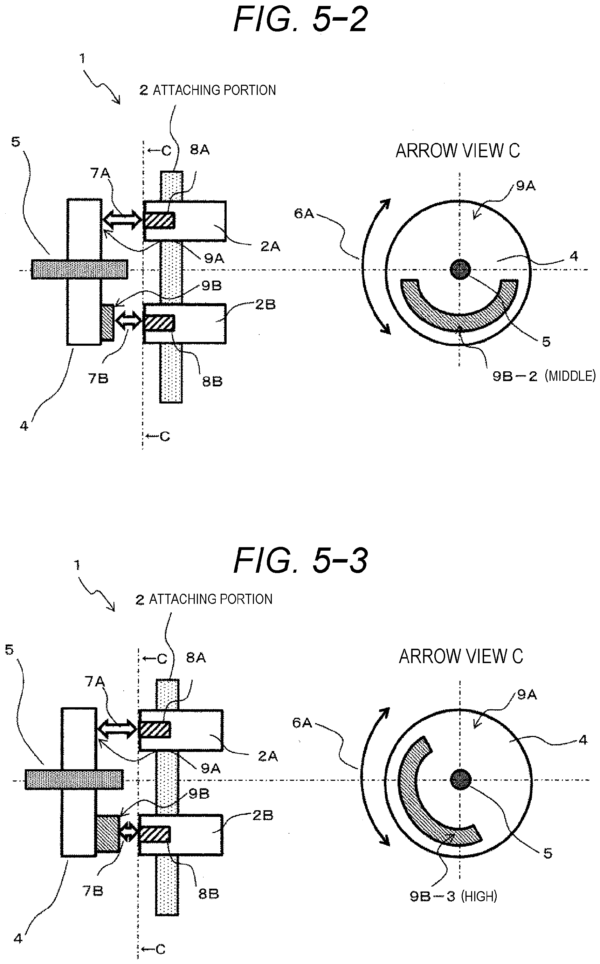

FIG. 5 illustrates an example in which change of a gap between a sensor 2 and an object to be measured 4 is provided in a rotating shaft direction, instead of a radial direction of the object to be measured. A sensing surface is continuously changed from a sensing surface (low) 9B-1, to a sensing surface (middle) 9B-2, and to a sensing surface (high) 9B-3, according to the position of the sensing surface of when the sensing surface is rotated in a rotating direction 6A of the object to be measured 4. A gap 7B is changed when the object to be measured 4 is rotated as illustrated in FIGS. 5-1, 5-2, and 5-3.

### (Fifth Embodiment)

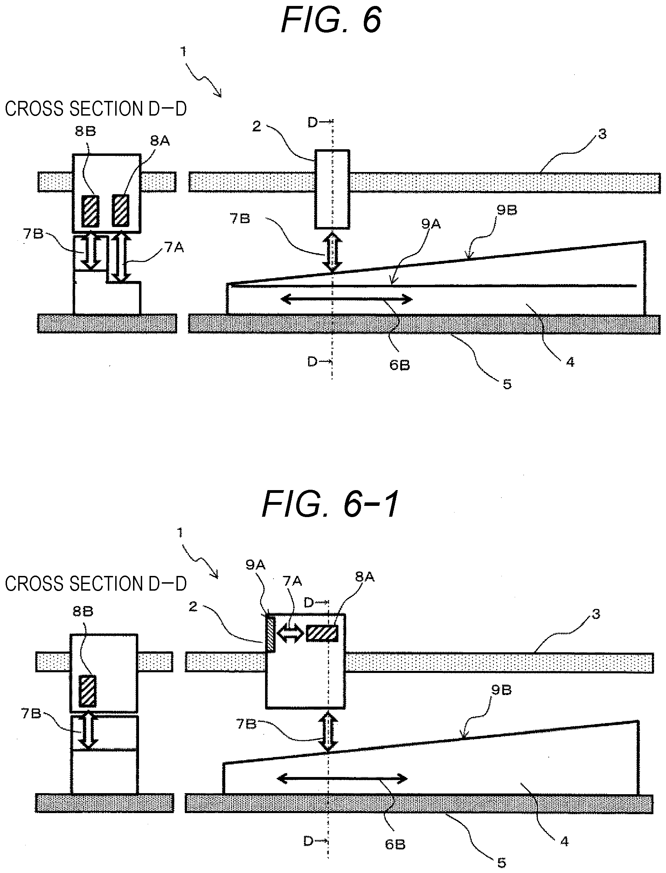

FIG. 6 illustrates a configuration in which a detecting direction of a position is changed from a rotating direction to a linear direction, and an object to be measured 4 is moved in a moving direction 6B and a sensor 2 detects the position of the object to be measured 4. An effect similar to that of the first embodiment can be obtained in the present configuration.

### (Sixth Embodiment)

FIG. 6-1 illustrates a configuration in which a detecting direction of a position is changed to a linear direction, similarly to FIG. 6, but a reference surface 9A is arranged in a sensor 2, instead of on an object to be measured 4, and thus a gap 7A holds a constant gap and only a sensing surface 9B is arranged on the object to be measured 4. A gap 7B is changed according to a moving amount of the object to be measured 4 in a moving direction 6B. That is, in a case where the object to be measured 4 is moved in the moving direction 6B, the gaps 7A and 7B between the reference surface 9A and the sensing surface 9B, and the sensor 2 are gradually changed from the same gap to gaps having a difference according to the position of the object to be measured 4. An effect similar to that of the first embodiment can be obtained in the present configuration. Note that the reference surface 9A may be configured using a part of a sensor attaching portion 3.

### (Seventh Embodiment)

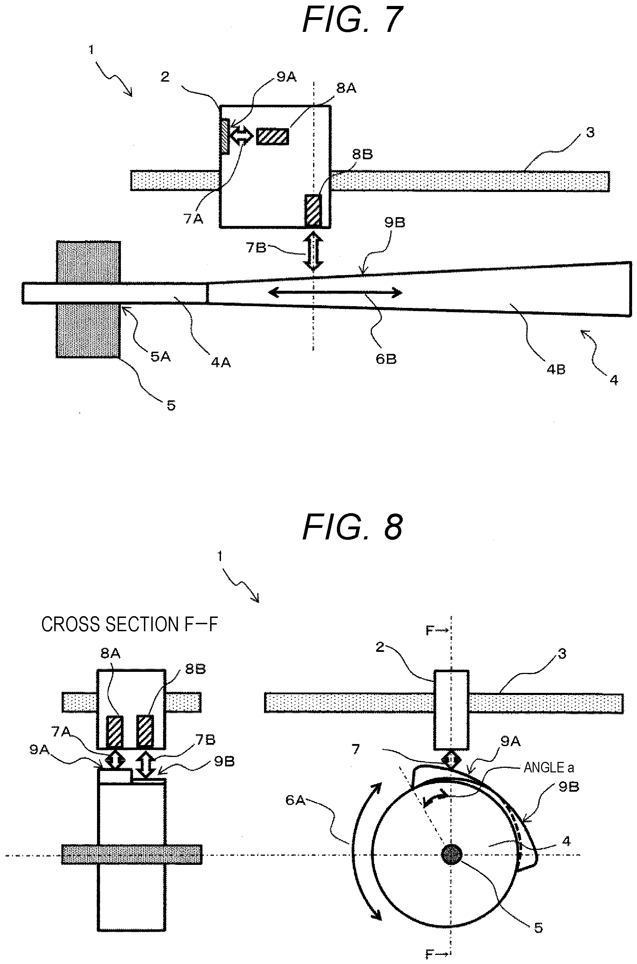

Further, FIG. 7 illustrates an embodiment in which an object to be measured 4 is formed of a cylindrical portion 4A having a cylindrical shape and a conical portion 4B having a conical shape, and the cylindrical portion 4A of the object to be measured 4 is arranged to penetrate a hole 5A of an object to be measured support portion 5. By forming the object to be measured 4 into the cylindrical shape and the conical shape, a gap 7B between a reference coil 8B and a reference surface 9B is not changed even if the object to be measured 4 is rotated in a plane perpendicular to a moving direction 6B, and by arranging a reference surface 9A in a sensor 2, position detection can be performed even if the object to be measured 4 is rotated. Note that the reference surface 9A may be configured using a part of a sensor attaching portion 3.

### (Eighth Embodiment)

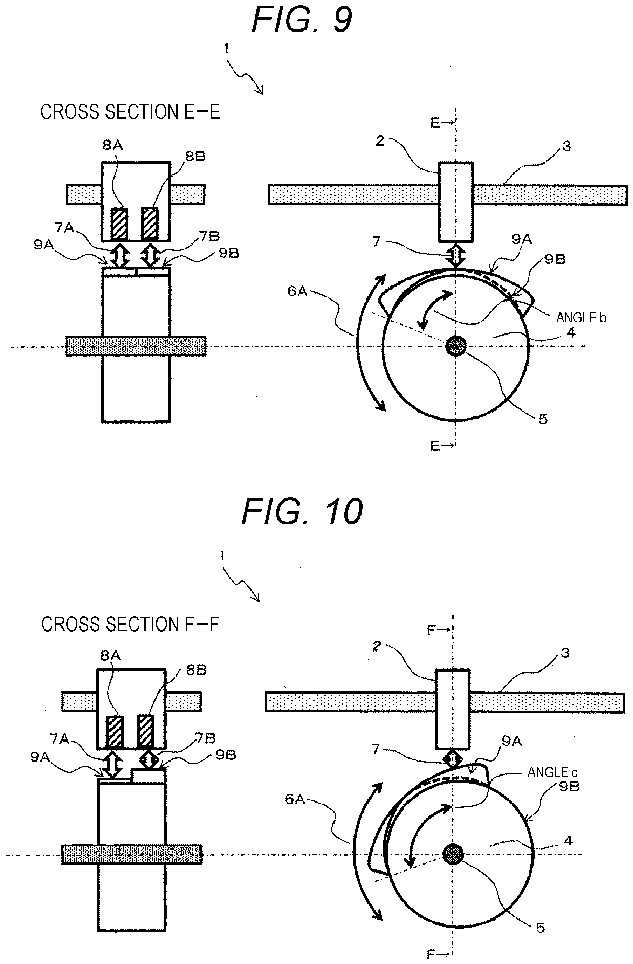

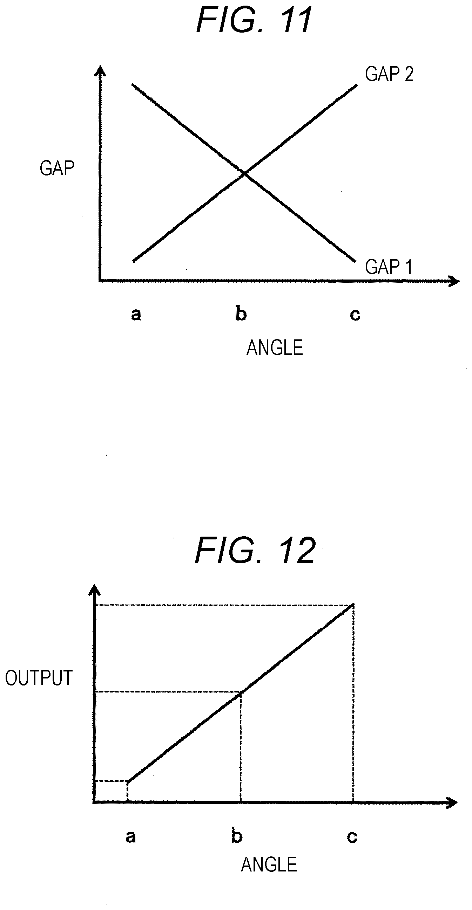

FIGS. 8, 9, and 10 illustrate diagrams in which an object to be measured 4 is positioned in positions of an angle a, an angle b, and an angle c from one end portion of a reference surface 9A. Further, FIG. 11 is a graph illustrating a relationship between angles of the object to be measured 4 and a gap between the object to be measured 4 and the sensor 2. A gap 1 is a gap between the sensor 2 and the reference surface 9A, and a gap 2 is a gap between the sensor 2 and a sensing surface 9B.

With a configuration characterized in that the gap 1 and the gap 2 intersect with each other, like the present configuration, sensitivity according to a rotation angle can be made large. In addition, by adjusting a reference-sensing coil balance adjusting volume described above, using the position of the angle b as a reference, the reference surface 9A and the sensing surface 9B becomes the same surface, that is, the gap 1 and the gap 2 becomes the same gap, and robustness becomes high with respect to change of the gap due to position aberration or temperature change of when an object to be measured 4 is positioned in the position of the angle b.

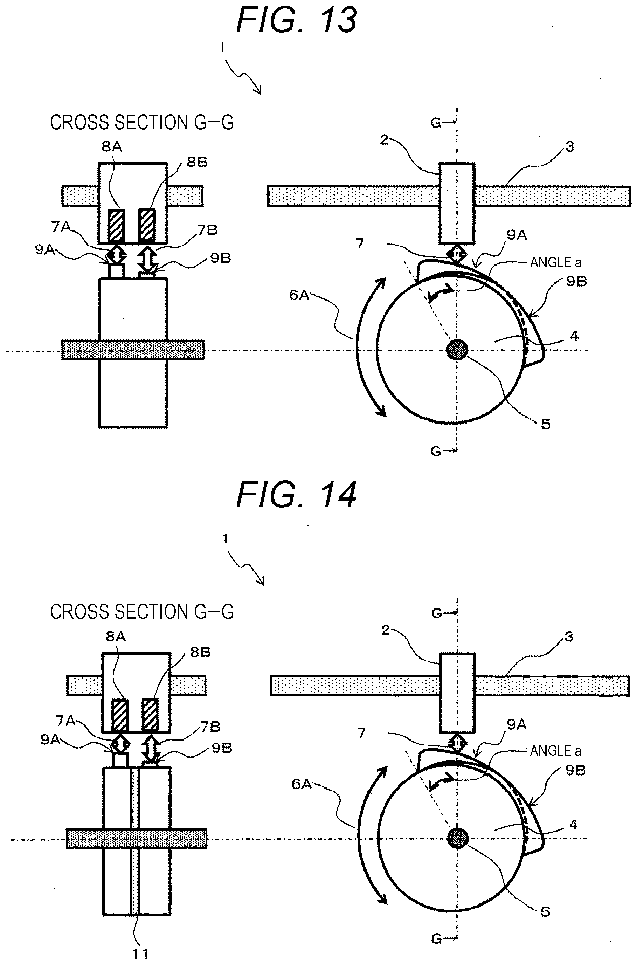

A configuration to improve detectability of the reference coil 9A and the sensing coil 9B by arranging the reference surface 9A and the sensing surface 9B in a rib-like manner, as illustrated in FIG. 13, a configuration to separate the reference surface 9A and the sensing surface 9B by an insulating material 11 as a material to be magnetized to improve the detectability, as described in FIG. 14, or a configuration to change the material of the reference surface 9A and the material of the sensing surface 9B to cause a reference coil 8A and a sensing coil 8B to have different sensitivity may be employed.

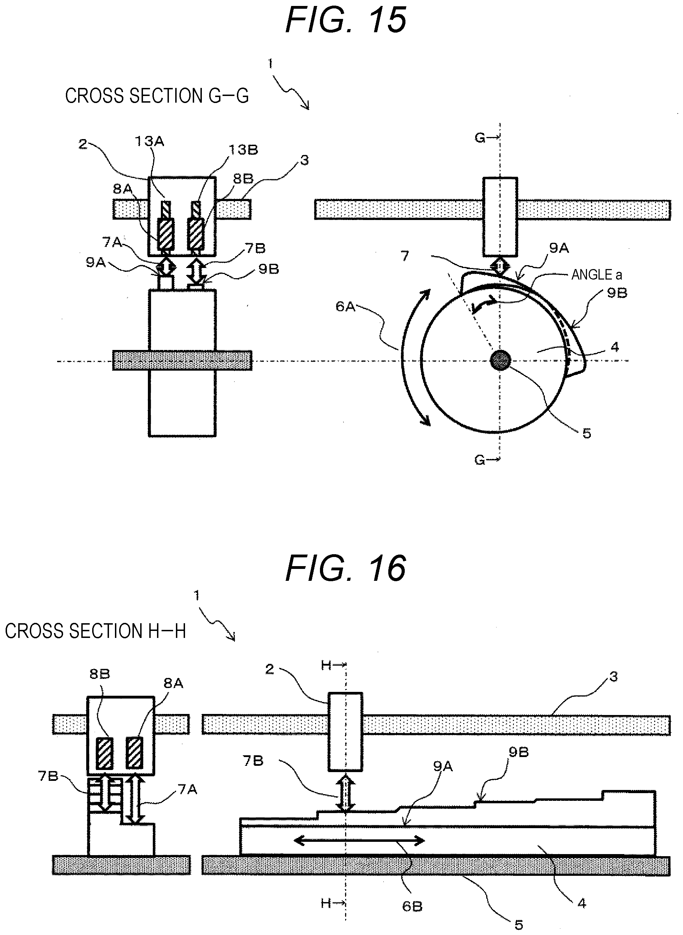

Further, cores 13A and 13B may be respectively arranged in the reference coil 8A and the sensing coil 8B, as illustrated in FIG. 15, to improve the sensitivity.

### (Ninth Embodiment)

FIG. 16 illustrates a configuration in which a detecting direction of a position is changed to a linear direction, and a reference surface 9B is configured in a stepwise manner and a sensor 2 detects the position of the reference surface 9B. An effect similar to that of the first embodiment can be obtained in the present configuration.

Note that the present invention is not limited to the above-described embodiments and includes various modifications. For example, the above embodiments are described in detail to explain the present invention in an easy-to-understand manner, and the present invention is not necessarily limited to one including all the configurations. Further, a part of the configuration of a certain embodiment or modification can be replaced with the configuration of another embodiment or modification, or the configuration of another embodiment or modification can be added to the configuration of the certain embodiment or modification. Further, another configuration can be added to/deleted from/replaced with a part of the configurations of the embodiments or modifications.

### Reference Signs List

- 1: position detection device
- 2: sensor
- 3: sensor attaching portion
- 4: object to be measured
- 4A: object to be measured cylindrical portion
- 4B: object to be measured conical portion
- 5: object to be measured support portion
- 5A: object to be measured support portion hole portion
- 6A: rotating direction
- 6B: moving direction
- 7: gap
- 7A: gap 1
- 7B: gap 2
- 8A: reference coil
- 8B: sensing coil
- 9A: reference surface
- 9B: sensing surface
- 9B-1: sensing surface (low)
- 9B-2: sensing surface (middle)
- 9B-3: sensing surface (high)
- 10: shield
- 11A: angle a
- 11B: angle b
- 11C: angle c
- 12: insulating material
- 13A: core
- 13B: core
- 100: detection circuit
- 101: transmitter
- 102: frequency adjusting volume
- 103: gain adjusting volume
- 104A: resistor 1
- 104B: resistor 2
- 105: reference-sensing coil balance adjusting volume
- 106: bridge circuit
- 107: operational amplifier 1
- 108: differential amplifier circuit
- 109: operational amplifier 2
- 110: synchronization signal
- 111: detector circuit
- 112: reference voltage
- 113: resistor
- 114: offset adjusting volume
- 115: operational amplifier 3
- 116: offset circuit
- 117: output

## Claims

1. A position detection device configured to be attached to an object to be measured with a predetermined gap,
the object to be measured having a mechanism that changes the predetermined gap,
the position detection device configured to detect the change as change of inductance of a coil included inside the position detection device.

2. The position detection device according to claim 1, wherein the mechanism is a mechanism that continuously changes the predetermined gap.

3. The position detection device according to claim 2, wherein the mechanism is formed in a stepwise manner, formed into a gear shape, or formed into an uneven shape.

4. The position detection device according to claim 2, wherein the mechanism is a mechanism that changes two or more types of gaps in one object to be measured.

5. The position detection device according to claim 4, wherein the change of the two or more types of gaps in the mechanism is detected as a difference in change of inductances detected in two coils including a sensing coil and a reference coil.

6. The position detection device according to claim 5, wherein the mechanism has a circular shape on one side and an elliptical shape on the other side, and mechanism change of the circular shape is detected by the reference coil and mechanism change of the elliptical shape is detected by the sensing coil.

7. The position detection device according to claim 4, wherein a mechanism that changes a gap is provided in a direction different from a moving direction of the object to be measured.

8. The position detection device according to claim 4, wherein the mechanism is formed of a plurality of rib shapes.

9. The position detection device according to claim 4, wherein, in the mechanism, a material of the one side and a material of the other side are different through an insulating material.

10. The position detection device according to claim 1, wherein a surface different from a surface of which the change of inductance is detected is covered with a shielding material.

11. The position detection device according to claim 10, wherein the shielding material is formed of a soft magnetic body.

12. The position detection device according to claim 5, wherein the sensing coil and the reference coil are integrated.

13. The position detection device according to claim 5, wherein the reference coil detects the gap in a place different from the object to be measured, and the sensing coil detects change of the gap of the object to be measured.

14. The position detection device according to claim 5, wherein an output characteristic of the detection of the change of the gaps is a characteristic in which the reference coil and the sensing coil intersect with each other.
